(19) Europäisches Patentamt
European Patent Office
Office européen des brevets

(11) Veröffentlichungsnummer : **0 103 165**
**B1**

(12) # EUROPÄISCHE PATENTSCHRIFT

(45) Veröffentlichungstag der Patentschrift : **30.07.86**

(51) Int. Cl.⁴ : **C 09 B 62/095**, C 09 B 62/515

(21) Anmeldenummer : **83107882.9**

(22) Anmeldetag : **10.08.83**

(54) **Verfahren zur Herstellung einer Mischung von 1:2-Kobaltkomplex- und 1:2-Chromkomplex-Azofarbstoffen.**

(30) Priorität : **13.08.82 DE 3230102**

(43) Veröffentlichungstag der Anmeldung : **21.03.84 Patentblatt 84/12**

(45) Bekanntmachung des Hinweises auf die Patenterteilung : **30.07.86 Patentblatt 86/31**

(84) Benannte Vertragsstaaten : **BE CH DE FR GB IT LI**

(56) Entgegenhaltungen :
**EP-A- 0 019 152**
**DE-A- 1 644 285**
**FR-A- 2 022 872**

(73) Patentinhaber : **HOECHST AKTIENGESELLSCHAFT**
**Postfach 80 03 20**
**D-6230 Frankfurt am Main 80 (DE)**

(72) Erfinder : **Hoyer, Ernst, Dr.**
**Eptingweg 3**
**D-6230 Frankfurt am Main 80 (DE)**

**EP 0 103 165 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der faser-reaktiven Schwermetallkomplex-Azofarbstoffe.

1 : 2-Kobaltkomplex farbstoffe und 1 : 2-Chromkomplexfarbstoffe der allgemeinen Formel (1)

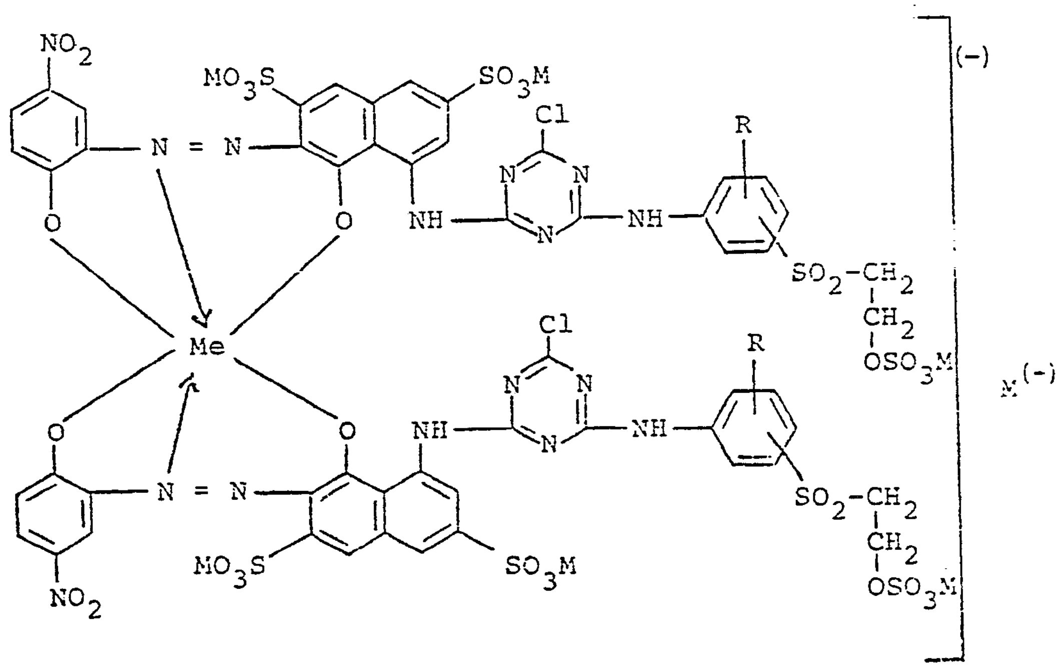

(1)

in welcher

Me ein Kobaltatom oder ein Chromatom ist,

R für ein Wasserstoffatom, die Methylgruppe oder die Methoxygruppe steht,

M ein Wasserstoffatom oder ein Alkalimetallatom, wie Natrium oder Kalium, oder das Äquivalent eines Erdalkalimetallatomes, wie des Calciums, bedeutet und die Gruppe der Formel $-SO_2-CH_2-CH_2-OSO_3M$ in meta- oder in para-Stellung zur Aminogruppe an den Benzolkern gebunden ist, sind aus der deutschen Offenlegungsschrift 1 644 285, soweit R gleich Waserstoff ist, bekannt.

Diese können in der Weise hergestellt werden, daß man, beispielsweise gemäß dem Ausführungsbeispiel 1 dieser deutschen Offenlegungsschrift 1 644 285, beispielsweise eine 1 : 2-Chromkomplexverbindung der allgemeinen Formel (2)

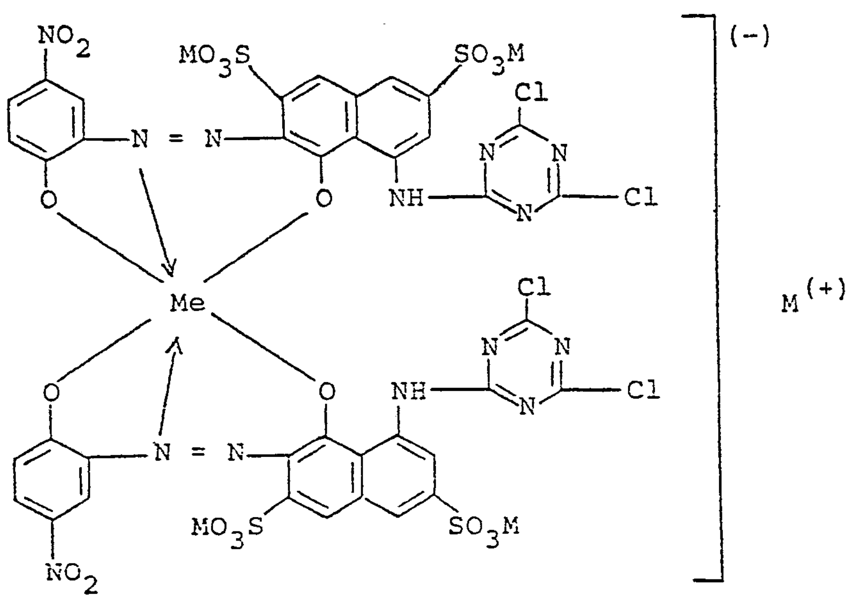

(2)

in welcher Me hier ein Chromatom bedeutet und M hier für Natrium oder Kalium steht, mit 3-(β-Sulfatoäthylsulfonyl)-anilin in wäßrigem Medium umsetzt und den erhaltenen Chromkomplex-Azofarbstoff entsprechend der allgemeinen Formel (1) durch Aussalzen mit Natriumchlorid isoliert.

Diese Chromkomplexazoverbindung der Formel (2) wird nach den Angaben der deutschen Offenlegungsschrift 1 644 285 nach dem in der britischen Patentschrift 985 481 unter Beispiel 1 aufgeführten Verfahren hergestellt. Hierbei wird gemäß dieser britischen Patentschrift so verfahren, daß man eine Azoverbindung der allgemeinen Formel (3)

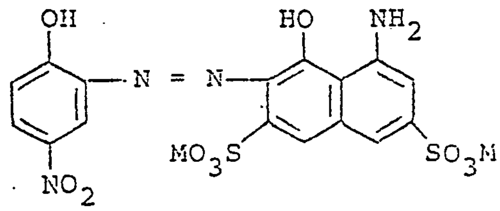

(3)

in welcher M die obengenannte Bedeutung besitzt, in isolierter Form als Ausgangsverbindung einsetzt und in Wasser mit Chromtriacetat in die 1 : 2-Chromkomplexazoverbindung der allgemeinen Formel (4)

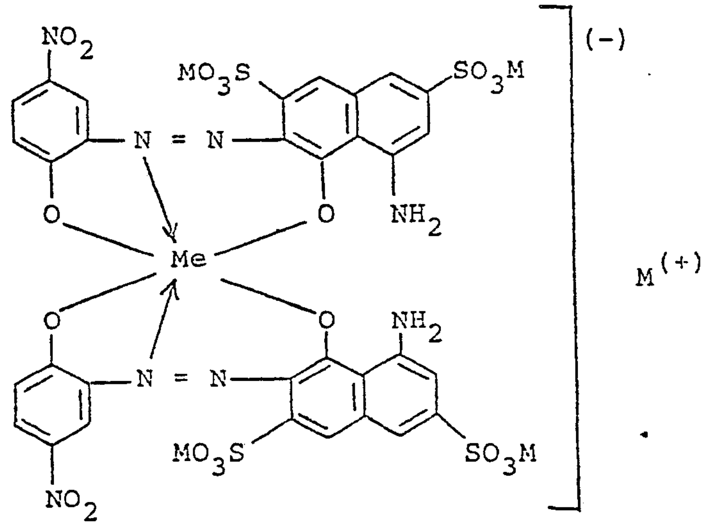

(4)

in welcher Me ein Chromatom bedeutet und M für Natrium oder Kalium steht, überführt. Diese Chromkomplexazoverbindung entsprechend der allgemeinen Formel (4) wird sodann durch Ausfällen mittels Kaliumchlorid, durch Filtration und Auswaschen isoliert und gereinigt, sodann wiederum in Wasser gelöst und mit Cyanurchlorid zur Chromkomplexazoverbindung entsprecheend der allgemeinen Formel (2) umgesetzt, die wiederum durch Ausfällung mittels Kaliumchlorid isoliert wird.

Nach der deutschen Offenlegungsschrift 1 644 285 (Seite 12) können sodann der 1 : 2-Chromkomplexazofarbstoff und der auf entsprechende Weise herstellbare 1 : 2-Kobaltkomplexazofarbstoff im Molverhältnis von 66 : 34 gemischt werdeen. Mit dieser Mischung werden in Gegenwart eines alkalischen, säurebindenden Mittels auf Baumwolle neutral-schwarze Färbungen erhalten.

Desweiteren ist in der deutschen Auslegeschrift 1 226 728 unter Beispiel 3 ebenfalls die Herstellung der 1 : 2-Kobaltkomplexazoverbindung entsprechend der allgemeinen Formel (2), in welcher hier Me ein Kobaltatom bedeutet und M für Natrium steht, beschrieben. In diesem Ausführungsbeispiel wird ebenfalls so verfahren, daß die Azoverbindung der allgemeinen Formel (3) in isolierter Form zur Kobaltkomplexazoverbindung entsprechend der allgemeinen Formel (4) übergeführt wird, die sodann durch Aussalzen mit Natriumchlorid und durch Filtration isoliert wird ; anschließend wird diese isolierte Kobaltkomplexazoverbindung entsprechend der allgemeinen Formel (2) wiederum in Wasser gelöst und mit Cyanurchlorid zur Kobaltkomplexazoverbindung entsprechend der allgemeinen Formel (2) umgesetzt, die wiederum durch Aussalzen mittels Natriumchlorid und Filtration isoliert wird.

Nach diesen bekannten Verfahrensweisen erfolgt somit bei der Herstellung eines Gemisches aus Chrom- und Kobaltkomplex-Azofarbstoffen entsprechend der allgemeinen Formel (1), ausgehend von den Ausgangsverbindungen 4-Nitro-2-aminophenol und 1-Amino-8-hydroxynaphthalin-3,6-disulfonsäure, eine jeweils viermalige Isolierung der Verfahrensprodukte im Verlaufe der Herstellung der einzelnen 1 : 2-Chrom- und 1 : 2-Kobaltkomplexazofarbstoffe der allgemeinen Formel (1) mit einem anschließenden zusätzlichen Verfahrensschritt, bei welchem die Einzelfarbstoffe miteinander gemischt werden müssen. Für eine technische Herstellung von Gemischen von Farbstoffen der allgemeinen Formel (1) sind

demnach die beschriebenen Arbeitsweisen wenig vorteilhaft, weil durch die Isolierung der verschiedenen Verfahrensstufen aufwendige Apparaturen notwendig sind und wegen der vielen Verfahrensschritte die Lohnkosten extrem hoch werden. Daneben ist, bedingt durch die zeitraubenden Filtrationsschritte, die das Räumen und Reinigen der Filterpressen notwendig machen, sowie durch die hieraus sich ergebenden notwendigen Folgeschritte (erneutes Anrühren des Filterkuchens und Lösen in Wasser etc.) die Raum-Zeit-Ausbeute in dieser Gesamtverfahrensweise schlecht. Daneben fallen bei den Filtrationsstufen jeweils namhafte Mengen stark elektrolythaltiger Abwässer an, deren Aufarbeitung und Beseitigung große Probleme und Kosten verursachen. Zudem ist, neben der Kostenfrage, auch das Mischen der 1 : 2-Chromkomplex- und 1 : 2-Kobaltkomplexazofarbstoffe entsprechend der allgemeinen Formel (1) mit einer Staubbelästigung, z. B. bei der Probeentnahme, verbunden.

Es bestand demnach die Aufgabe, ein Verfahren zur Herstellung von Mischungen von Metallkomplexazofarbstoffen der allgemeinen Formel (1) zu entwickeln, bei welchem diese Nachteile entfallen oder zumindest weitgehend ausgeschaltet werden.

Diese Aufgabe wurde mit der vorliegenden Erfindung gelöst. Sie betrifft ein verbessertes Verfahren zur Herstellung einer Mischung von 1 : 2-Kobaltkomplex- und 1 : 2-Chromkomplex-Azofarbstoffen der obengenannten und definierten allgemeinen Formel (1) im molaren Mischungsverhältnis von 1 : 5 bis 5 : 1, bevorzugt von 1 : 1 bis 1 : 3, das dadurch gekennzeichnet ist, daß man in einem Eintopfverfahren und ohne Zweischenisolierung der Verfahrensprodukte zunächst 4-Nitro-2-aminophenol in an für sich bekannter Verfahrensweise, beispielsweise bei einer Temperatur zwischen — 5 °C und + 20 °C in wäßrigem, stark saurem Medium mittels Natriumnitrit, diazotiert und mit 1-Amino-8-hydroxynaphthalin-3,6-disulfonsäure in an und für sich bekannter Verfahrensweise, beispielsweise in wäßrigem Medium, bei einer Temperatur zwischen 0 °C und 70 °C, bevorzugt zwischen 5 °C und 60 °C, und im alkalischen pH-Bereich, bevorzugt bei einem pH-Wert zwischen 7,5 und 9, zur obengenannten und definierten Azoverbindung der allgemeinen Formel (3) kuppelt, diese Azoverbindung ohne Zwischenisolierung durch Umsetzung mit der äquivalenten Menge von kobalt- und chromabgebenden Mitteln mit einem molaren Verhältnis zwischen Kobalt und Chrom im Bereich von 5 : 1 bis 1 : 5, bevorzugt von 1 : 1 bis 1 : 3; in ein Gemisch aus den 1 : 2-Kobaltkomplex- und 1 : 2-Chromkomplexazoverbindungen der obengenannten allgemeine Formel (1) genannten Bedeutungen besitzen, überführt und dieses Gemisch der Metallkomplexazoverbindungen der allgemeinen Formel (4) sodann ohne Zwischenisolierung mit einer Verbindung der allgemeinen Formel (5)

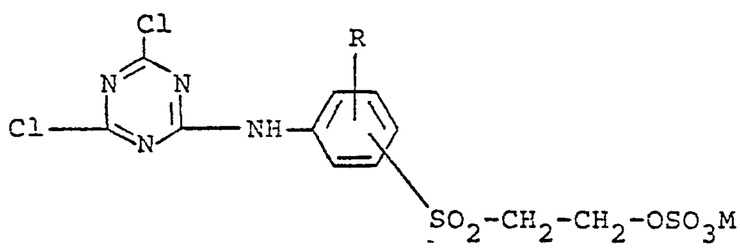

(5)

in welcher M und R die für die allgemeine Formel (1) genannten Beudeutungen haben und die β-Sulfatoäthylsulfonyl-Gruppe in meta- oder para-Stellung zur NH-Gruppe an den Benzolkern gebunden ist, zu dem erfindungsgemäßen Gemisch aus den 1 : 2-Kobaltkomplex- und 1 : 2-Chromkomplex-Azofarbstoffen der allgemeinen Formel (1) umsetzt.

Bei der Umsetzung des Gemisches der Schwermetallkomplexazoverbindungen der allgemeinen Formel (4) mit der Dichlortriazin-Verbindung der allgemeinen Formel (5) kann man erfindungsgemäß bevorzugt so verfahren, daß man diese Verbindung der allgemeinen Formel (5) in nicht isolierter Form direkt als Reaktionsgemisch aus einer Reaktion zwischen Cyanurchlorid und einer Aminoverbindung der allgemeinen Formel (6)

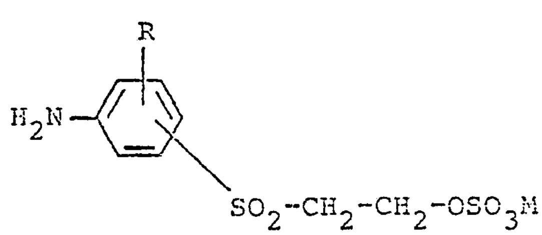

(6)

in welcher R und M die für die allgemeine Formel (1) genannten Bedeutungen haben, dem Reaktionsansatz zugibt.

Das erfindungsgemäße Gemisch der 1 : 2-Kobaltkomplex- und 1 : 2-Chromkomplex-Azofarbstoffe entsprechend der allgemeinen Formel (1) kann, in üblicher Weise, nach deren oben beschriebener Synthese direkt aus dem Reaktionsansatz durch Sprühtrocknung oder durch Ausfällen mittels einem Elektrolyt, wie beispielsweise Natriumchlorid oder Kaliumchlorid, isoliert werden ; die nach der Synthese erfindungsgemäß erhaltene Lösung der 1 : 2-Kobaltkomplex- und 1 : 2-Chromkomplex-Azofarbstoffe

kann aber auch als solche, gegebenenfalls nach Aufkonzentrierung oder Verdünnung, direkt als Flüssigpräparation der färberischen Verwendung zugeführt werden.

Die Überführung der metallfreien Azoverbindungen der allgemeinen Formel (3) in die Kobalt- und Chromkomplexazoverbindungen entsprechend der allgemeinen Formel (4) geschieht nach an und für sich bekannten, zahlreich in der Literatur beschriebenen Verfahrensweisen, wie beispielsweise auch nach dem Verfahren der in der deutschen Offenlegungsschrift 1 644 285 für die Einzelfarbstoffe beschriebenen Chromierungs- und Kobaltierungsreaktionen. Kobalt- und chromabgebende Mittel sind die hier aus der Literatur bekannten Kobalt und Chromverbindungen, vorzugsweise Kobalt- und Chromsalze.

Ebenso erfolgt die Umsetzung der aminogruppenhaltigen Metallkomplexazoverbindungen der allgemeinen Formel (4) mit den Dichlortriazinverbindungen der allgemeinen Formel (5) analog den in der Literatur beschriebenen Verfahrensweisen, so beispielsweise in wäßrig-organischem Medium, bspw. in einer Mischung aus Wasser und Aceton, bevorzugt jedoch in wäßrigem Medium, bei einer Temperatur zwischen 0 und 60 °C, bevorzugt zwischen 10 und 50 °C, und bei einem pH-Wert zwischen 2 und 8, bevorzugt zwischen 5 und 7,5, erforderlichenfalls unter Zusatz eines säurebindenden Mittels, wie beispielsweise einem Alkali- oder Erdalkalicarbonat, einem Alkali- oder Erdalkalihydrogencarbonat oder -hydroxid oder einem Alkaliacetat, wobei die Alkali- und Erdalkalimetalle vorzugsweise solche des Natriums, Kaliums und Calciums sind ; säurebindende Mittel sind ebenso tertiäre Amine, wie beispielsweise Pyridin oder Triäthylamin oder Chinolin. Weiterhin kann der Zusatz einer geringen Menge eines handelsüblichen Netzmittels zweckmäßig sein.

Bei der Diazotierung des 4-Nitro-2-aminophenols verwendet man vorteilhaft als Säure Schwefelsäure ; Schwefelsaüre kann ebenfalls vorteilhaft zum Neutralisieren und Ansäuern des alkalischen Kupplungsgemisches nach Synthese der Azoverbindung der allgemeinen Formel (3) vor der Metallisierungsreaktion verwendet werden. Diesbezüglich kann man nämlich vorteilhaft zur Neutralisation der Säure vor der Kupplungsreaktion oder bei der Acylierungsreaktion Calciumhydroxid als säurebindendes Mittel einsetzen. Auf diese Weise ist es möglich, die Säure und das säurebindende Mittel in Form des unlöslichen Calciumsulfats auszufällen und dieses durch Filtration von der Lösung des Farbstoffgemisches abzutrennen. Auf diese Weise fällt der Endfarbstoff, bedingt durch den geringen Elektrolytgehalt, in höherer Konzentration, d. h. höherer Farbstärke, an.

Die nachstehenden Beispiele dienen zur Erläuterung der Erfindung. Die darin genannten Teile sind Gewichtsteile und die Prozentangaben stellen Gewichtsprozente dar, sofern nicht anders vermerkt. Gewichtsteile stehen im Verhältnis zu Volumenteilen wie das Kilogramm zum Liter.

## Beispiel 1

154 Teile 4-Nitro-2-aminophenol werden innerhalb von 10 Minuten in eine Mischung aus 60 Teilen 95,5 %iger wäßriger Schwefelsäure und 2 500 Teilen Eiswasser eingetragen und 15 Minuten gerührt. Die erhaltene Suspension wird bei einer Temperatur zwischen 0 und 5 °C unter Zugabe von 500 Teilen Eis mit 173 Teilen einer 40 %igen wäßrigen Natriumnitritlösung innerhalb von 30 Minuten diazotiert. Es wird noch 30 Minuten bei 0 bis 5 °C weitergerührt und überschüssige salpetrige Säure sodann, wie üblich, mittels Amidosulfonsäure zerstört. Durch Zugabe von 7,5 Teilen Calciumhydroxid wird bei einer Temperatur zwischen 0 und 5 °C ein pH-Wert zwischen 7,5 und 8,0 eingestellt.

In diese Diazoniumsalzlösung gibt innerhalb von 30 Minuten 319 Teile 1-Amino-8-hydroxynaphthalin-3,6-disulfonsäure. Während der Kupplungsreaktion hält man durch portionsweise Zugabe von insgesamt 87,5 Teilen Calciumhydroxid einen pH-Wert zwischen 7,5 und 8. Die Temperatur der Kupplungsreaktion liegt anfangs bei 0 bis 5 °C ; sie wird im Verlaufe einer Stunde durch Einleiten von Wasserdampf auf 30 bis 35 °C gebracht, sodann innerhalb einer weiteren Stunde auf 55 bis 60 °C. Man rührt eine Stunde bei 60 °C weiter ; die Kupplungsreaktion ist danach beendet.

Man stellt anschließend den pH des Kupplungsansatzes mittels 40 Teilen einer 48 %igen Schwefelsäure auf einen Wert zwischen 6,8 und 7,0 ein und gibt in diese Suspension 170 Teile kristallisiertes Natriumacetat, 49,1 Tl. Kobaltsulfat ($CoSO_4 \cdot 7H_2O$) und 170 Teile Kaliumchromalaun [$KCr(SO_4)_2 \cdot 12H_2O$]. Die Temperatur dieses Metallisierungsansatzes wird sodann durch Einleiten von Wasserdampf auf 100 °C gebracht und 3 Stunden bei 100 °C gehalten.

Sodann läßt man das Reaktionsgemisch unter Rühren auf 55 bis 60 °C abkühlen und gibt zu diesem den Ansatz einer Acylierungsreaktion hinzu, der wie folgt hergestellt wurde : In eine Mischung auf 700 Teilen Eis und 300 Teilen Wasser werden 281 Teile 4-(β-Sulfatoäthylsulfonyl)-anilin eingetragen und mittels 112 Teilen Natriumbicarbonat bei einem pH-Wert zwischen 5,5 und 6,0 gelöst. In diese Lösung gibt man schnell 192 Teile festes Cyanurchlorid. Der Ansatz wird zunächst eine Stunde bei einer Temperatur zwischen 0 und 5 °C und einem pH-Wert zwischen 3,5 und 4,5, sodann noch eine Stunde bei 8 bis 12 °C und einem pH-Wert zwischen 5,0 und 5,5 und anschließend noch eine Stunde innerhalb dieses letzgenannten pH-Bereiches bei einer Temperatur von etwa 15 °C gerührt ; während dieser Kondensationsreaktion (Acylierungsreaktion) werden die angegebenen pH-Werte durch portionsweise Zugabe von insgesamt etwa 70 Teilen Natriumbicarbonat gehalten.

Nach Zugabe dieses Acylierungsgemisches wird der Ansatz für die zweite Kondensationsreaktion (Acylierungsreaktion) mit 90 Teilen Calciumhydroxid versetzt, um einen pH-Wert zwischen 6,5 und 7,0

einzustellen. Man rührt mehrere Stunden weiter, beispielsweise über Nacht, wobei man die Temperatur bei 17 bis 20 °C hält. Das ausgefallene Calciumsulfat wird sodann abgesaugt ; das Filtrat wird mit 100 Teilen Oxalsäure versetzt und nach 10 Minuten mit 105 Teilen Natriumbicarbonat auf einen pH-Wert zwischen 5,0 und 5,5 gestellt ; 10 Teile Dinatriumhydrogenphosphat und sodann 60 Teile Kieselgur werden zugegeben, die Farbstofflösung einige Zeit gerührt und sodann filtriert.

Aus dem Filtrat wird das erfindungsgemäße Verfahrensprodukt durch Sprühtrocknung isoliert. Man erhält 1 350 Teile eines schwarzen Pulvers, das neben Elektrolytsalzen etwa 69 % eines Gemisches an den Kobalt- und Chromkomplex-Azofarbstoffen entsprechend der allgemeinen Formel

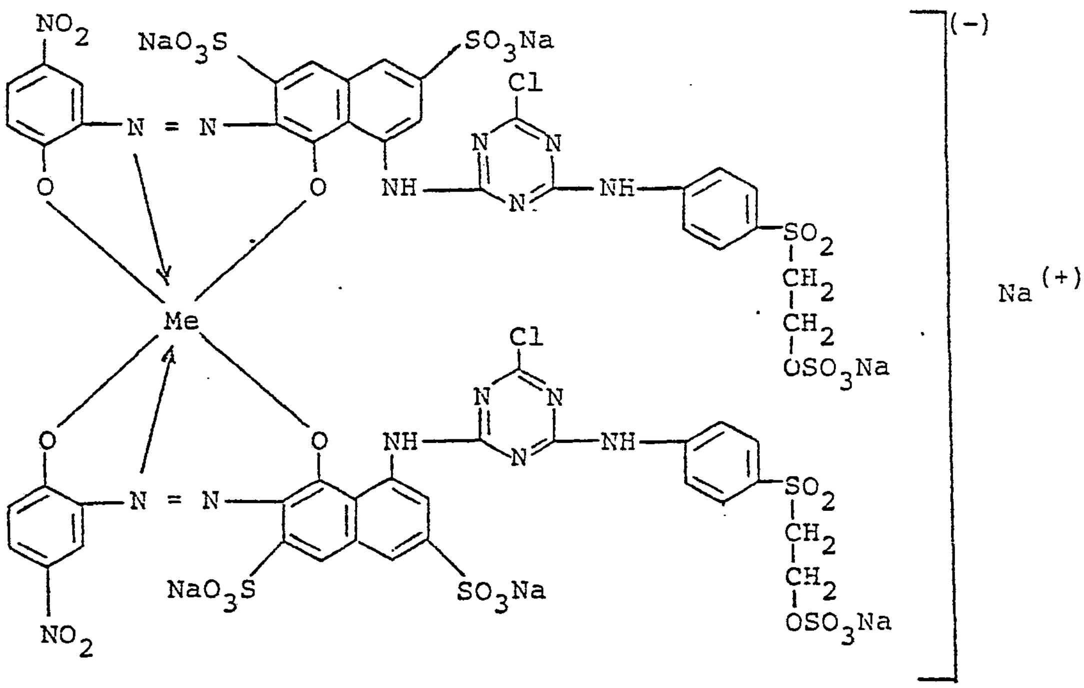

enthält, in welcher Me das Kobalt- und Chromatom im molaren Mischungsverhältnis von 1 : 2 bedeutet.

Dieses Farbstoffgemisch zeigt sehr gute faserreaktive Farbstoffeigenschaften und liefert beispielsweise auf natürlichen oder regenerierten Cellulosefasermaterialien, wie beispielsweise Baumwolle, nach den für faserreaktive Farbstoffe gebräuchlichen Druckverfahren, je nach eingesetzter Menge, neutralgraue bis neutral-schwarze Drucke von ausgezeichneten Echtheiten bei sehr hohen Fixierquoten.

## Beispiel 2

154 Teile 4-Nitro-2-aminophenol werden innerhalb von 10 Minuten in eine Mischung aus 300 Teilen 31 %iger wäßriger Salzsäure und 100 Teilen Eiswasser eingetragen, 15 Minuten gerührt und sodann bei einer Temperatur von 0 bis 5 °C unter Zugabe von 500 Teilen Eis mittels 173 Teilen einer 40 %igen wäßrigen Natriumnitritlösung innerhalb von 30 Minuten diazotiert. Dieser Diazotierungsansatz wird noch 30 Minuten weitergerührt, überschüssige salpetrige Säure wie üblich durch Amidosulfonsäure zerstört, mit 2 000 Teilen Wasser verdünnt und sodann mit 220 Teilen Natriumcarbonat bei einer Temperatur von 0 bis 50 °C auf einen pH-Wert zwischen 5,0 und 5,5 eingestellt.

In diese Diazoniumsalzsuspension gibt man 319 Teile 1-Amino-8-hydroxynaphthalin-3,6-disulfonsäure und stellt sodann den pH dieses Kupplungsansatzes mit Natriumcarbonat auf einen Wert zwischen 7,5 und 8,0 ein und hält diesen pH-Bereich während der gesamten Kupplungsreaktion (hierzu werden insgesamt etwa 220 Teile Natriumcarbonat verbraucht). Die zu Anfang der Kupplungsreaktion bestehende Temperatur von etwa 5 °C und in einer weiteren Stunde auf 55 bis 60 °C erhöht und schließlich noch eine Stunde bei 55 bis 60 °C gehalten ; danach ist die Kupplungsreaktion beendet.

Mit 11,5 Teilen einer 31 %igen wäßrigen Salzsäure wird dieser Ansatz auf einen pH-Wert zwischen 6,8 und 7,0 eingestellt und 170 Teile kristallisiertes Natriumacetat, 49,1 Teile Kobaltsulfat (als Heptahydrat) und 170 Teile Kaliumchromalaun zugegeben ; die Reaktionstemperatur wird sodann auf 100 °C gebracht und bei diesem Wert drei Stunden gehalten.

Anschließend läßt man den Ansatz auf 55 bis 60 °C abkühlen und gibt den aus der nachfolgend beschriebenen Acylierungsreaktion erhältlichen Ansatz hinzu :

Man trägt in eine Mischung aus 700 Teilen Wasser und 300 Teilen Eis 281 Teile 3-(β-Sulfatoäthylsulfonyl)-anilin ein und löst es durch portionsweise Zugabe von 113 Teilen Natriumbicarbonat bei einem pH-Wert zwischen 5,5 und 6,0. 192 Teile festes Cyanurchlorid werden schnell in diese Lösung gegeben und die Kondensationsreaktion (Acylierungsreaktion) zunächst eine Stunde bei einer Temperatur von etwa

0 °C und einem pH-Wert zwischen 3,0 und 4,0, sodann eine Stunde bei etwa 10 °C und einem pH-Wert zwischen 4,5 und 5,0 und schließlich eine Stunde bei einer Temperatur von etwa 15 °C und einem pH-Wert zwischen 5,0 und 5,5 durchgeführt; hierbei werden die pH-Bereiche mittels etwa 71 Teilen Natriumbicarbonat eingestellt und gehalten.

Nach Zugabe dieses Acylierungsgemisches, wie oben erwähnt, zu den Gemischen der Kobalt- und Chromkomplexazoverbindungen rührt man diesen Ansatz zur Durchführung der zweiten Kondensationsreaktion (Acylierungsreaktion) drei Stunden bei 55 bis 60 °C weiter, wobei man mit etwa insgesamt 225 Teilen Natriumbicarbonat einen pH-Wert zwischen 6,5 und 6,8 hält. Die gebildete Farbstofflösung versetzt man sodann mit Dinatriumhydrogenphosphat und 60 Teilen Kieselgur und filtriert nach einiger Zeit ab.

Aus dem Filtrat wird das erfindungsgemäße Farbstoffgemisch durch Sprühtrocknung isoliert. Es werden etwa 1 600 Teile eines schwarzen Farbstoffpulvers erhalten, welches neben Elektrolytsalzen etwa 58 % an einem Gemisch aus den Kobalt- und Chromkomplexazofarbstoffen entsprechend der allgemeinen Formel·

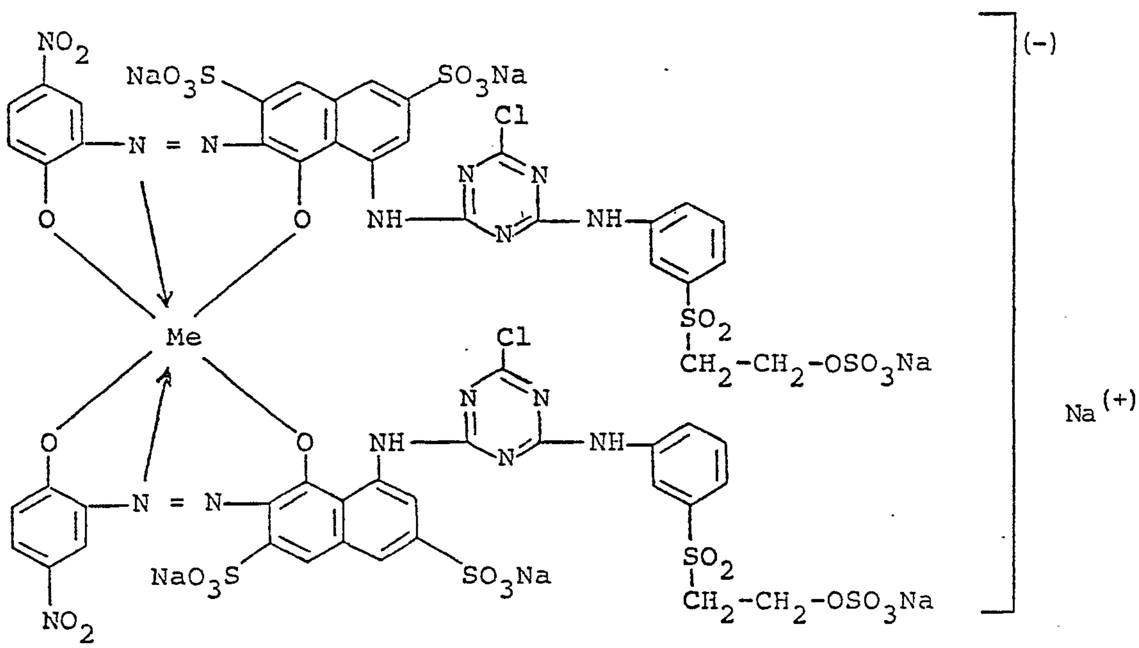

in welcher Me ein Kobalt- und Chromatom im molaren Verhältnis von 1 : 2 bedeutet, enthält.

Dieses erfindungsgemäß erhältliche Gemisch aus etwa 33 Prozentteilen des Kobaltkomplexazofarbstoffes und etwa 67 Prozentteilen des Chromkomplex-Azofarbstoffes stellt ein Farbstoffgemisch mit sehr guten faserreaktiven Farbstoffeigenschaften dar, mit welchem auf Cellulosefasermaterialien, wie beispielsweise Baumwolle, nach den für faserreaktive Farbstoffe üblichen Druckverfahren farbstarke und echte, neutralgraue bis neutral-schwarze Drucke hergestellt werden können.

## Beispiele 3 bis 9

In den nachfolgenden Tabellenbeispielen sind weitere erfindungsgemäß erhältliche Gemische von 1 : 2-Kobaltkomplex- und 1 : 2-Chromkomplex-Azofarbstoffen mit Hilfe der allgemeinen Formel (1) beschrieben (sie liegen in der Regel als Natrium- oder Kaliumsalze vor, sodaß M demgemäß Natrium oder Kalium ist). Sie werden in erfindungsgemäßer Weise, beispielsweise analog dem obigen Ausfürungsbeispiel 1 oder Ausführungsbeispiel 2, durch Umsetzung ihrer entsprechenden Ausgangsverbindungen und den kobalt- und chromabgebenden Mitteln in dem angegebenen molaren Verhältnis hergestellt. Die erfindungsgemäß erhaltenen Gemische sehr gute faserreaktive Farbstoffeigenschaften und liefern beispielsweise auf Cellulosefasermaterialien, wie Baumwolle, nach den für faserreaktive Farbstoffe üblichen Fixiermethoden kräftige, echte Färbungen und Drucke mit dem in dem jeweiligen Tabellenbeispiel angegebenen Farbton.

| Bsp. | Phenylrest entsprechend der Anilinverbindung (6) | molares Verhältnis von Co/Cr | Farbton |
|---|---|---|---|
| 3 | 2-Methyl-5-(ß-sulfato-äthylsulfonyl)-phenyl | 1:2 | neutrales Schwarz |

(Fortsetzung)

| Bsp. | Phenylrest entsprechend der Anilinverbindung (6) | molares Verhältnis von Co/Cr | Farbton |
|---|---|---|---|
| 4 | 2-Methoxy-5-(ß-sulfato-äthylsulfonyl)-phenyl | 1:2 | neutrales Schwarz |
| 5 | 4-Methoxy-3-(ß-sulfato-äthylsulfonyl)-phenyl | 1:2 | neutrales Schwarz |
| 6 | 4-(ß-Sulfatoäthylsulfo-nyl)-phenyl | 1:1 | rötliches Schwarz |
| 7 | 3-(ß-Sulfatoäthylsul-fonyl)-phenyl | 2:1 | rotstichi-ges Schwarz |
| 8 | 4-(ß-Sulfatoäthylsulfo-nyl)-phenyl | 1:3 | grünliches Schwarz |
| 9 | 4-(ß-Sulfatoäthylsulfo-nyl)-phenyl | 3:1 | rotstichi-ges Schwarz |

## Patentansprüche

1. Verfahren zur Herstellung von Gemischen von 1 : 2-Kobaltkomplex- und 1 : 2-Chromkomplex-Azofarbstoffen der allgemeinen Formel (1)

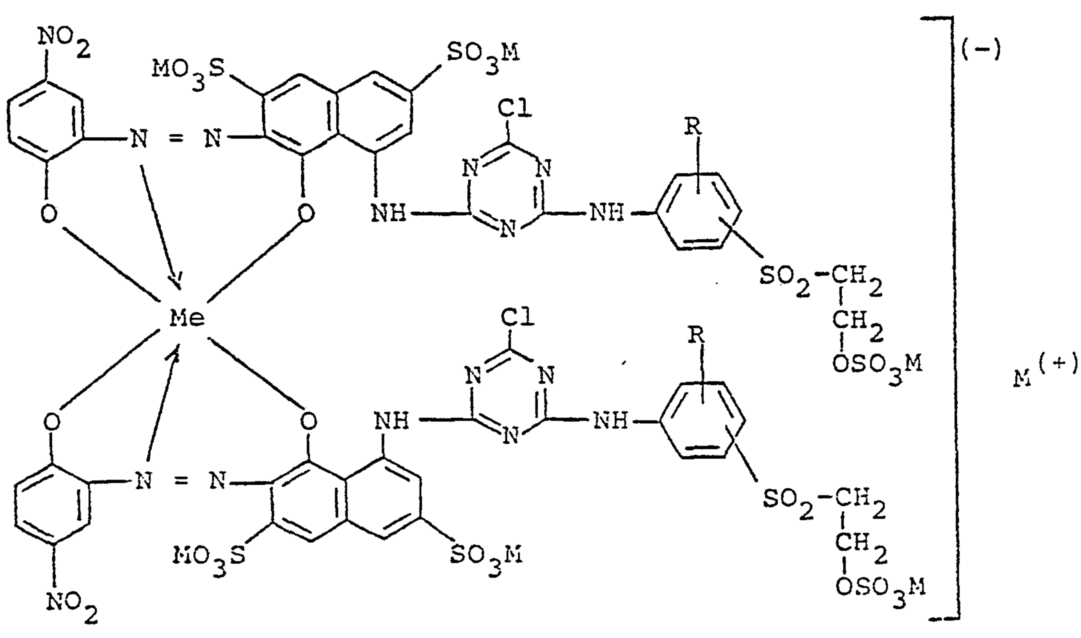

(1)

in welcher

Me ein Kobaltatom oder ein Chromatom ist,

R für ein Wasserstoffatom, die Methylgruppe oder die Methoxygruppe steht,

M ein Wasserstoffatom oder ein Alkalimetallatom oder das Äquivalent eines Erdalkalimetallatomes bedeutet und

die Gruppe der Formel $-SO_2-CH_2-CH_2-OSO_3M$ in meta- oder in para-Stellung zur NH-Gruppe an den Benzolkern gebunden ist,

in molaren Mischungsverhältnis von 1 : 5 bis 5 : 1, dadurch gekennzeichnet, daß man in einem Eintopfverfahren und ohne Zwischenisolierung der Verfahrenszwischenprodukte zunächst 4-Nitro-2-aminophenol diazotiert und mit 1-Amino-8-hydroxy-naphthalin-3,6-disulfonsäure zur Azoverbindung der allgemeinen Formel (3)

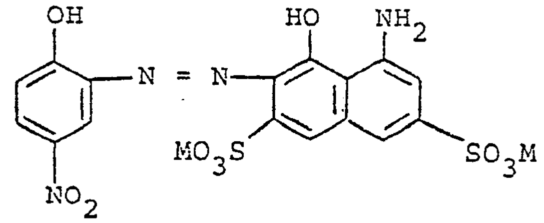

(3)

in welcher M die obengenannte Bedeutung besitzt, kuppelt, diese Azoverbindung ohne Zwischenisolierung durch Umsetzung mit der äquivalenten Menge von kobalt- und chromabgebenden Mitteln, für die des molare Verhältnis zwischen Kobalt und Chrom im Bereich von 5 : 1 bis 1 : 5 liegt, in ein Gemisch aus den 1 : 2-Kobaltkomplex- und 1 : 2-Chromkomplex-Azoverbindungen der allgemeinen Formel (4)

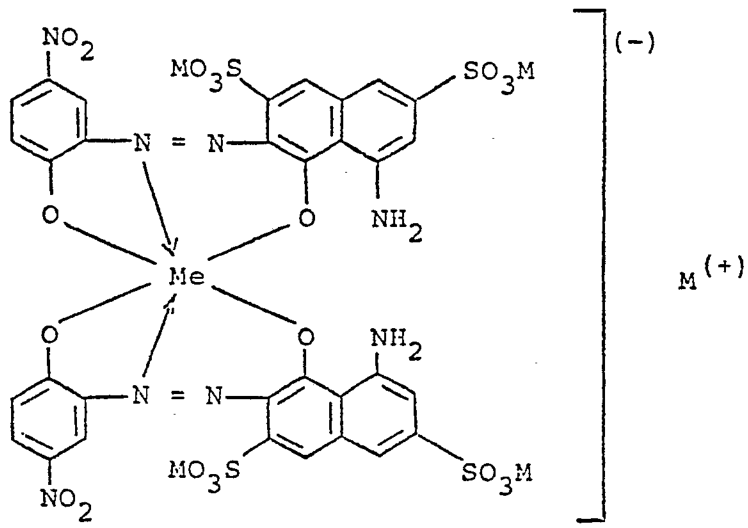

(4)

in welcher Me und M die obengenannten Bedeutungen besitzen, überführt und dieses Gemisch der Metallkomplex-Azoverbindungen der allgemeinen Formel (4) sodann ohne Zwischenisolierung mit einer Verbindung der allgemeinen Formel (5)

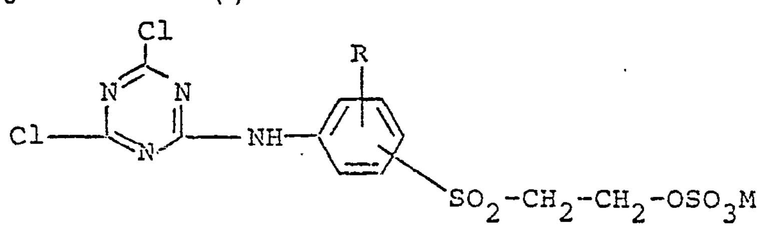

(5)

in welcher M und R die obengenannten Bedeutungen haben und die β-Sulfatoäthylsulfonyl-Gruppe in meta- oder para-Stellung zur NH-Gruppe an den Benzolkern gebunden ist, zu dem erfindungsgemäßen Gemisch aus den 1 : 2-Kobaltkomplex- und 1 : 2-Chromkomplex-Azofarbstoffen der allgemeinen Formel (1) umsetzt.

2. Verfahren nach Anspruch 1, dadurch gekennzeichnet, daß man hier bei der Umsetzung des Gemisches der Schwermetallkomplex-Azoverbindungen der allgemeinen Formel (4) mit der Dichlortriazin-Verbindung der allgemeinen Formel (5) die Verbindung der allgemeinen Formel (5) in nicht isolierter Form direkt als Reaktionsgemisch aus einer Reaktion zwischen Cyanurchlorid und einer Aminoverbindung der allgemeinen Formel (6)

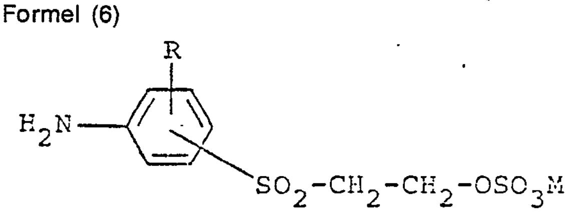

(6)

in welcher M und R die in Anspruch 1 genannten Bedeutungen haben, dem Reaktionsansatz zugibt.

3. Verfahren nach Anspruch 1 oder 2, dadurch gekennzeichnet, daß man bei der Diazotierung des 4-Nitro-2-aminophenols und zur Neutralisation und zum Ansäuern des alkalischen Kupplungsgemisches als Säure Schwefelsäure verwendet und zur Neutralisation dieser Säure als säurebindendes Mittel Calciumhydroxid einsetzt.

4. Verfahren nach Anspruch 1, 2 oder 3, dadurch gekennzeichnet, daß man das gebildete Farbstoffgemisch, gegebenenfalls nach Abfiltration von Calciumsulfat, durch Sprühtrocknung isoliert.

**Claims**

1. A process for preparing mixtures of 1 : 2-cobalt complex and 1 : 2-chromium complex azo dyestuffs of the general formula (1)

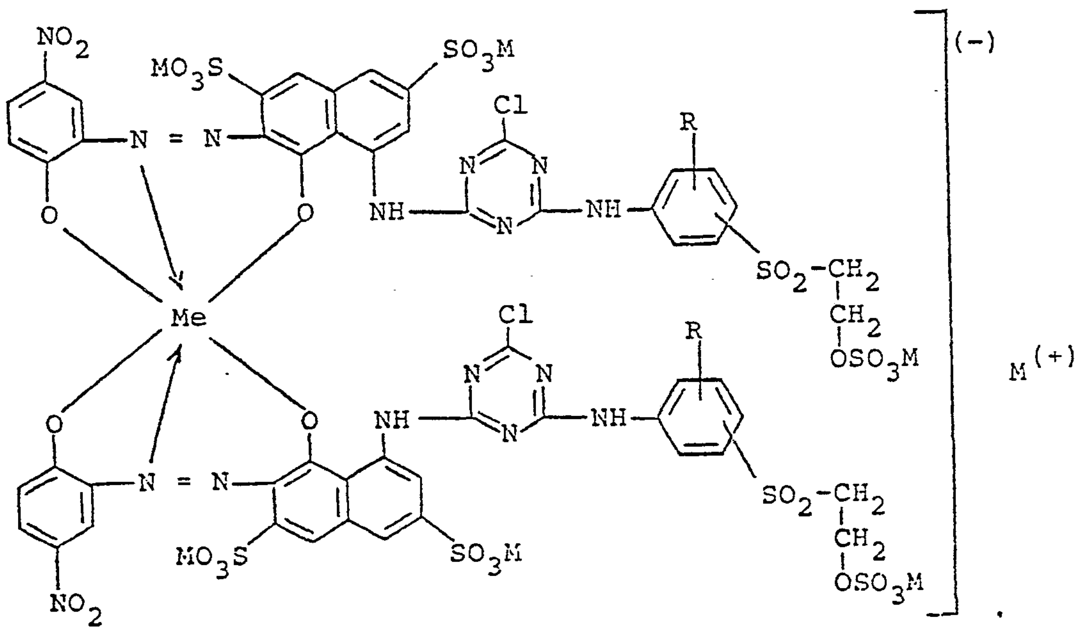

(1)

in which

Me is a cobalt atom or a chromium atom,

R represents a hydrogen atom, the methyl group or the methoxy group,

M denotes a hydrogen atom or an alkali metal atom or the equivalent of an alkaline earth metal atom, and the group of the formula $—SO_2—CH_2—CH_2—OSO_3M$ is bonded to the benzene nucleus in meta- or para-position relative to the NH-group,

in a molar mixing ratio of 1 : 5 to 5 : 1, characterized by that, in a one-vessel process and without intermediate isolation of the process intermediates, first of all to diazotize 4-nitro-2-aminophenol and couple with 1-amino-8-hydroxy-naphthalene-3,6-disulfonic acid to give an azo compound of the general formula (3)

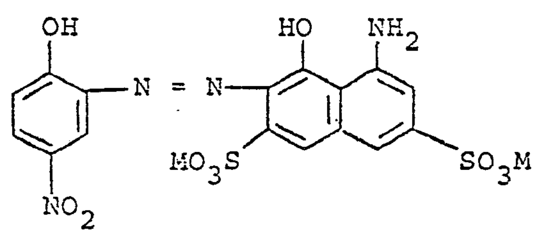

(3)

in which M has the abovementioned meaning, to convert this azo compound without intermediate isolation by reaction with an equivalent amount of cobalt- and chromiumdonating agents for which the molar ratio between cobalt and chromium is within the range from 5 : 1 to 1 : 5, into a mixture of 1 : 2-cobalt complex and 1 : 2-chromium complex azo compounds of the general formula (4)

(See formula p. 11)

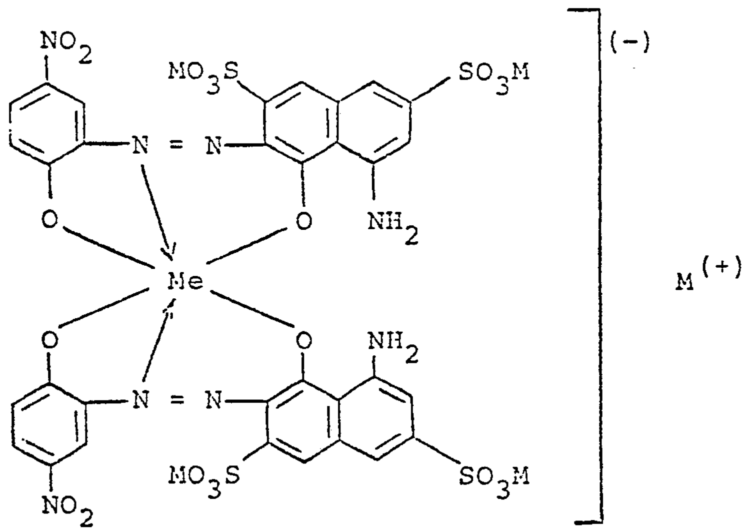

(4)

in which Me and M have the abovementioned meanings, and then to react this mixture of metal complex azo compounds of the general formula (4) without intermediate isolation with a compound of the general formula (5)

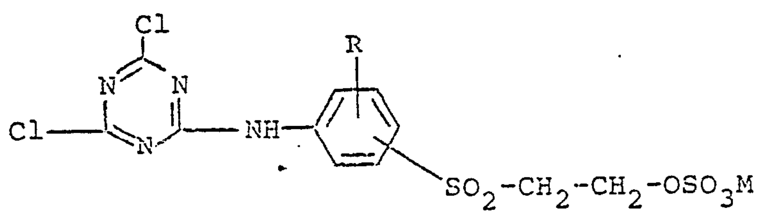

(5)

in which M and R have the abovementioned meanings and the β-sulfatoethylsulfonyl group is bonded to the benzene nucleus in meta- or para-position relative to the NH-group, to yield the mixture, in accordance with the invention, of 1 : 2-chromium complex azo dyestuffs of the general formula (1).

2. The process according to claim 1, characterized by that, in the step of reacting the mixture of heavy-metal complex azo compounds of the general formula (4) with the dichlorotriazine compound of the general formula (5), the compound of the general formula (5) is added in its unisolated form directly as a reaction mixture from a reaction between cyanuric chloride and an amino compound of the general formula (6)

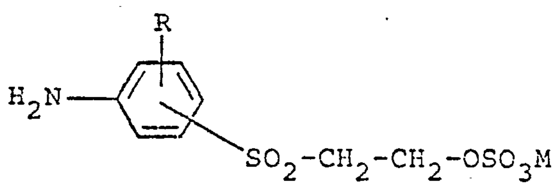

(6)

in which M and R have the meanings mentioned in claim 1, to the reaction batch.

3. The process according to claim 1 or 2, characterized by that the acid used in diazotizing the 4-nitro-2-aminophenol and for neutralizing and acidifying the alkaline coupling mixture is sulfuric acid and the acid-binding agent used to neutralize this acid is calcium hydroxide.

4. The process according to claim 1, 2 or 3, characterized by that the dyestuff mixture formed is isolated by spray-drying, if appropriate after calcium sulfate has been filtered off.

**Revendications**

1. Procédé de préparation de mélanges de colorants azoïques complexes de cobalt 1 : 2 et de chrome 1 : 2 répondant à la formule générale (1) :

(voir formule p. 12)

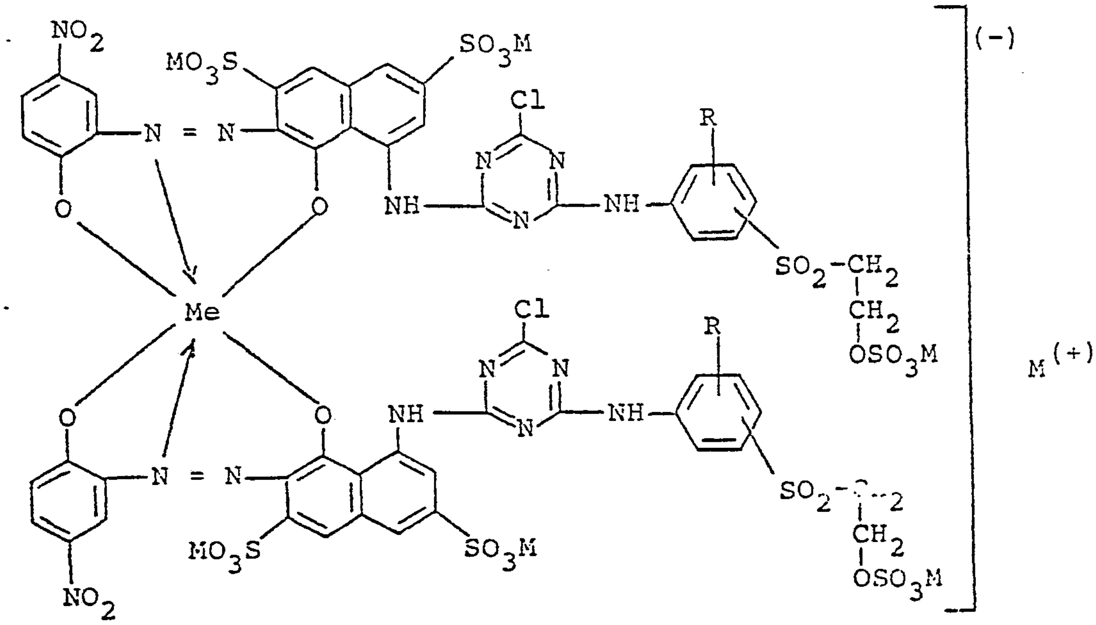

(1)

dans laquelle

Me représente un atome de cobalt ou un atome de chrome,

R représente un atome d'hydrogène, un radical méthyle ou un radical méthoxy,

M représente un atome d'hydrogène, un atome de métal alcalin ou l'équivalent d'un atome de métal alcalino-terreux et

le radical $-SO_2-CH_2-CH_2-OSO_3M$ occupe, sur le noyau benzénique, une position méta ou la position para relativement au radical NH,

dans un rapport molaire compris entre 1 : 5 et 5 : 1, procédé caractérisé en ce que, par une méthode en un seul pot, sans isolement de corps intermédiaires, on diazote d'abord l'amino-2 nitro-4 phénol, on copule le diazoïque avec l'acide amino-1 hydroxy-8 naphtalène-disulfonique-3,6 de manière à obtenir le composé azoïque répondant à la formule générale (3) :

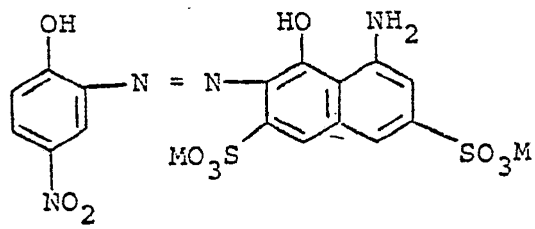

(3)

dans laquelle M a la signification précédemment donnée, on transforme ce composé azoïque, sans l'isoler intermédiairement, en le faisant réagir avec la quantité équivalente d'agents cédant du cobalt et cédant du chrome dans des proportions relatives telles que le rapport molaire du cobalt au chrome soit situé dans l'intervalle allant de 5 : 1 à 1 : 5, en un mélange de composés azoïques complexes du cobalt 1 : 2 et du chrome 1 : 2 répondant à la formule générale (4) :

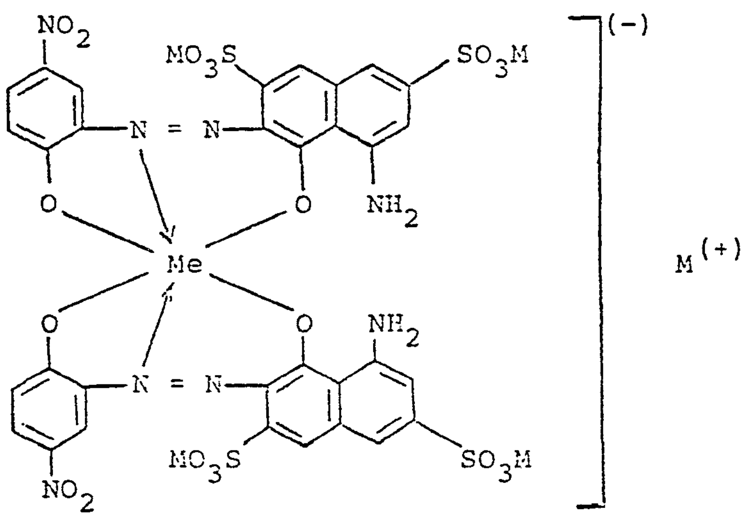

(4)

dans laquelle Me et M ont les significations précédemment données, on fait ensuite réagir ce mélange des composés azoïques complexes métallisés de formule générale (4), sans l'isoler intermédiairement, avec un composé répondant à la formule générale (5) :

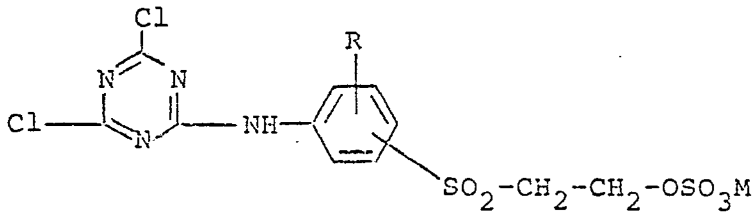

(5)

dans laquelle M et R ont les significations précédemment données, et le radical sulfato-2 éthylsulfonyle se trouve, sur le noyau benzénique, en position méta ou para, par rapport au radical NH, réaction qui conduit au mélange, conforme à l'invention, constitué des colorants azoïques complexes du cobalt 1 : 2 et du chrome 1 : 2 répondant à la formule générale (1).

2. Procédé selon la revendication 1 caractérisé en ce que, cette fois, pour la réaction du mélange des composés azoïques complexes de métaux lourds répondant à la formule générale (4) avec le composé dichlorotriazinique de formule générale (5), le composé de fomule générale (5) est ajouté au mélange réactionnel, non à l'état isolé, mais directement sous la forme du mélange provenant de la réaction du chlorure de cyanuryle avec un composé aminé répondant à la formule générale (6) :

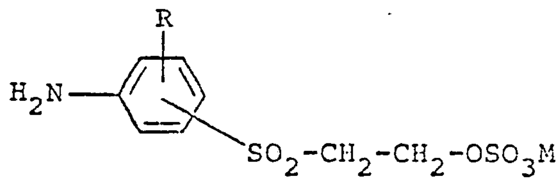

(6)

dans laquelle M et R ont les significations données à la revendication 1.

3. Procédé selon l'une des revendications 1 et 2, caractérisé en ce que, lors de la diazotation de l'amino-2 nitro-4 phénol ainsi que pour la neutralisation et pour l'acidification du mélange alcalin de copulation, on utilise, comme acide, l'acide sulfurique, et, pour la neutralisation de cet acide, on utilise comme accepteur d'acides l'hydroxyde de calcium.

4. Procédé selon l'une quelconque des revendications 1, 2 et 3, caractérisé en ce que le mélange de colorants formé est isolé par séchage avec pulvérisation, éventuellement après élimination du sulfate de calcium par filtration.